# EUROPÄISCHE PATENTSCHRIFT

(11) **EP 3 828 061 B1**
(45) Veröffentlichungstag und Bekanntmachung des Hinweises auf die Patenterteilung: **23.08.2023**
(21) Anmeldenummer: 20207492.8
(22) Anmeldetag: 13.11.2020
(51) Int. Cl.: B62H 3/12, E04H 6/00

(54) **AUFBEWAHRUNGSVORRICHTUNG, INSBESONDERE FÜR SPORTGERÄTE**
STORAGE DEVICE, IN PARTICULAR FOR SPORTS EQUIPMENT
DISPOSITIF DE STOCKAGE, EN PARTICULIER POUR ARTICLES DE SPORT

(30) Priorität: 28.11.2019 LU 101502
(43) Veröffentlichungstag der Anmeldung: 02.06.2021
(73) Patentinhaber: Alfred Schellenberg GmbH, 57078 Siegen (DE)
(72) Erfinder: Schellenberg, Sascha, 57074 Siegen (DE); Büttner, Manuel, 57074 Siegen (DE)
(74) Vertreter: Hoffmann, Jürgen

(56) Entgegenhaltungen:
- WO-A2-2006/129335
- DE-A1-102004 044 911
- DE-U1- 29 612 974
- FR-A1- 2 837 781
- US-A- 6 161 702
- US-A1- 2013 207 059
- US-B1- 6 237 781
- Anonymous: "MyLifter 2.0 by Garage Smart by myLIFTER - Kickstarter", , 1. Januar 2018 (2018-01-01), XP055712955, Gefunden im Internet: URL:https://www.kickstarter.com/projects/m ylifter/mylifter-20-by-garage-smart [gefunden am 2020-07-08]
- Anonymous: "Mylifter | Garage | Ceiling | Lift | Kayak | Bicycle | Woodworker's Journal", , 10. Oktober 2017 (2017-10-10), XP055714008, Gefunden im Internet: URL:https://www.woodworkersjournal.com/myl ifter-smarter-ceiling-storage/ [gefunden am 2020-07-13]
- Anonymous: "Amazon.com: Customer Questions & Answers", , 3. Oktober 2017 (2017-10-03), XP055714027, Gefunden im Internet: URL:https://www.amazon.com/ask/questions/a sin/B00ZTOV3O4/2 [gefunden am 2020-07-13]
- Anonymous: "The World's First Smart Hoist Makes Overhead Garage Storage Super-Simple - GarageSpot", , 1. Mai 2019 (2019-05-01), XP055712889, Gefunden im Internet: URL:https://web.archive.org/web/2019050109 5104/https://garagespot.com/mylift-bluetoo th-smart-hoist-overhead-garage-storage/ [gefunden am 2020-07-08]

## Beschreibung

Die Erfindung betrifft eine Aufbewahrungsvorrichtung, insbesondere für Sportgeräte, die dazu ausgebildet und bestimmt ist, an einer Decke oder einer Wand montiert zu werden und die eine Hebevorrichtung mit wenigstens einem flexiblen Zugmittel aufweist, wobei die Hebevorrichtung eine Wickelwelle, auf die das Zugmittel aufwickelbar ist, und einen als Rohrmotor ausgebildeten und wenigstens teilweise in der Wickelwelle angeordneten Antriebsmotor zum Antreiben der Wickelwelle aufweist.

Aus EP 3 050 784 A1 ist Aufhänge-Vorrichtung für Fahrräder bekannt. Die Aufhänge-Vorrichtung dient dazu, Fahrräder im am Vorder- oder Hinterrad aufgehängten Zustand möglichst platzsparend zu lagern. Die Aufhänge-Vorrichtung hat mehrere in je einer Hakenebene angeordnete, zu einer Seite hin offene Haken zum Einhängen eines Fahrrades. Jeder Haken ist an wenigstens zwei in einer Führungsschiene geführten Schlitten angeordnet.

Aus DE 199 18 074 A1 ist ein Fahrradaufzug bekannt. Der Fahrradaufzug beinhaltet zwei, jeweils an dem Ende eines biegsamen, zugfesten Elements, wie eines Kabels oder einer Kette, angeordnete Aufhängehaken zum Angreifen an ein Fahrrad und zum Heben eines Fahrrads.

Aus DE 35 19 991 A1 ist ein Deckenhalter für Sportgeräte und sonstige Einrichtungen des täglichen Bedarfs bekannt, bei dem mit Hilfe von Seilen und Umlenkrollen ein Hochziehen, Absenken und Arretieren der Last in verschiedenen Höhen möglich ist. Der Deckenhalter weist zwei Seile auf, die zwei an der Decke angebrachten Umlenkrollen zugeordnet sind. Die Seile sind am unteren Ende mit der Last verbunden. Die oberen Enden der Seile sind über vertikal schwenkbare Ösen geführt und an einem Griff vereinigt.

Unter der URL: https://www.kickstarter.com/projects/mylifter/mylifter-20-by-garage-smart ist eine gattungsgemäße Aufbewahrungsvorrichtung mit der Produktbezeichnung "MyLifter" offenbart, die an einer Decke oder einer Wand montiert wird und die eine Hebevorrichtung mit wenigstens einem flexiblen Zugmittel aufweist, wobei die Hebevorrichtung eine Wickelwelle, auf die das Zugmittel aufwickelbar ist.

Aus US 2013 0207059 A1 ist eine Anordnung zum Heben und Lagern eines Eishauses oder eines anderen Gegenstandes offenbart.

Die aus dem Stand der Technik bekannten Vorrichtungen sind kompliziert und aufwändig aufgebaut und nur umständlich bedienbar.

Es ist daher die Aufgabe der vorliegenden Erfindung, eine Vorrichtung anzugeben, die einfach herstellbar ist und dennoch besonders belastbar ist.

Die Aufgabe wird durch eine Aufbewahrungsvorrichtung der oben genannten Art gelöst, die dadurch gekennzeichnet ist, dass die Hebevorrichtung einen als Rohrmotor ausgebildeten und wenigstens teilweise in der Wickelwelle angeordneten Antriebsmotor zum Antreiben der Wickelwelle aufweist, wobei die Wickelwelle in einer zu ihrer Längserstreckungsrichtung senkrechten Ebene eine von der Kreisform abweichende Form aufweist und der Antriebsmotor ein Abtriebselement aufweist, das formschlüssig in der Wickelwelle angeordnet ist.

Die Aufbewahrungsvorrichtung hat den Vorteil, dass Gegenstände ohne besonderen Kraftaufwand und einfach an Orten verstaut werden können, die üblicherweise ungenutzt bleiben. Beispielsweise kann ein Gegenstand, wie ein Fahrrad oder ein Surfbrett, unmittelbar unter einer Gargendecke oder einer Zimmerdecke, verstaut werden. Es ist vorteilhaft auch möglich, gleichzeitig mehrere Gegenstände, wie beispielsweise mehrere Fahrräder, zu verstauen.

Bei der erfindungsgemäßen Aufbewahrungsvorrichtung sind vorteilhafter Weise keine aufwändigen und bauraumbeanspruchenden Flaschenzugkonstruktionen notwendig. Auch gibt es keine manuell zu bedienenden Zugseile, an denen der zu verstauende Gegenstand manuell heraufgezogen werden muss und die unter Zugspannung stehend im Zugriffsbereich des Benutzers wieder lösbar verankert werden müssen. Vielmehr muss der Benutzer bei der erfindungsgemäßen Aufbewahrungsvorrichtung keinen besonderen Kraftaufwand erbringen.

Die Erfindung hat außerdem den ganz besonderen Vorteil, dass die Aufbewahrungsvorrichtung ganz besonders raumsparend ausgebildet werden kann, so dass mehr Raum für das zu verstauende Gut zur Verfügung steht.

Die Aufbewahrungsvorrichtung wird vorzugsweise von unten an einer Decke, beispielsweise an einer Zimmerdecke, einer Kellerdecke oder einer Garagendecke, befestigt. Es ist alternativ auch möglich, die Aufbewahrungsvorrichtung im oberen Bereich einer Wand zu befestigen. Die Aufbewahrungsvorrichtung kann hierzu eine Wandhalterung aufweisen. Vorzugsweise wird die Aufbewahrungsvorrichtung fest und unbeweglich an einer Decke oder an einer Wand montiert.

Um einen Gegenstand zu verstauen, wird das flexible Zugmittel (oder vorzugsweise die flexiblen mehreren Zugmittel) durch Einschalten des Antriebsmotors zunächst so weist von der Wickelwelle abgewickelt, bis es von dem am Boden stehenden Bediener zum Ankoppeln des zu verstauenden Gegenstandes erreichbar ist (bzw. sind). Anschließend kann der Bediener den zu verstauenden Gegenstand bzw. die zu verstauenden Gegenstände, vorzugsweise mittels eines Ankoppelelements des flexiblen Zugmittels (bzw. der flexiblen Zugmittel) an die Aufbewahrungsvorrichtung ankoppeln. Danach wird der Antriebsmotor wieder eingeschaltet und die Wickelwelle dadurch bei entgegengesetzter Rotationsrichtung wieder in Rotation versetzt. Hierdurch wird das Zugmittel (bzw. werden die Zugmittel) wieder auf die Wickelwelle aufgewickelt, wodurch der angekoppelte Gegenstand (bzw. die angekoppelten Gegenstände) nach oben in eine Aufbewahrungsposition gezogen wird (werden). Der Raum unter dem verstauten Gegenstand, bzw. den verstauten Gegenständen, steht dann vorteilhafter Weise weiterhin zur freien Verfügung.

Der Antriebsmotor kann beispielsweise als Wechselstrommotor, insbesondere für eine Betriebsspannung von 230 Volt, ausgebildet sein. Alternativ kann der Motor als Gleichstrommotor, insbesondere für eine Betriebsspannung im Bereich von 5 Volt bis 30 Volt oder für eine Betriebsspannung von 12 Volt, ausgebildet sein. Die Aufbewahrungsvorrichtung kann insbesondere dazu ausgebildet sein, an ein Stromnetz, insbesondere mit einer Versorgungsspannung von 230 V, angeschlossen zu werden. Die Aufbewahrungsvorrichtung kann einen Stromrichter, insbesondere einen Transformator oder ein Schaltnetzteil, beinhalten, der eine Niederspannung, insbesondere eine Gleichspannung, zum Betreiben des Antriebsmotors bereitstellt. Der Stromrichter kann (alternativ oder zusätzlich) auch dazu dienen, einen Ladestrom, insbesondere ein Gleichstrom oder ein Niedervolt-Gleichstrom, für den aufzubewahrenden Gegenstand zur Verfügung zu stellen, was weiter unten im Detail erläutert ist.

Bei einer besonderen Ausführung ist dem Antriebsmotor ein Getriebe triebtechnisch nachgeschaltet. Eine solche Ausführung hat den ganz besonderen Vorteil, dass auch Gegenstände mit einem hohen Gewicht verstaut werden können, ohne einen Antriebsmotor mit einer höheren maximalen Ausgangsleistung verwenden zu müssen. Insbesondere kann vorteilhaft vorgesehen sein, dass auch das Getriebe in der Wickelwelle angeordnet ist. Hierdurch wird der in der Wickelwelle zur Verfügung stehende Bauraum besonders gut ausgenutzt. Dies erlaubt es, die gesamte Aufbewahrungsvorrichtung besonders kompakt auszubilden.

Bei einer ganz besonders vorteilhaften Ausführung sind der Antriebsmotor und das Getriebe Bestandteile eines Aktuators der als vorgefertigte Baueinheit in die Wickelwelle eingeschoben werden kann. Insbesondere kann der Aktuator ein Aktuatorgehäuse aufweisen, das wenigstens Teile des Antriebsmotors und wenigstens Teile des Getriebes umgibt.

Bei einer einfachen Ausführung weist die Aufbewahrungsvorrichtung unmittelbar an einem Gehäuse, das zumindest die Wickelwelle umgibt, wenigstens einen Bedienschalter auf. Diese Ausführung hat jedoch den Nachteil, dass die Aufbewahrungsvorrichtung so angebracht sein muss, dass der Benutzer den Bedienschalter erreichen kann.

Bei einer vorteilhaften Ausführung ist ein per Kabel angebundener Bedienschalter vorhanden, der beabstandet von den übrigen Teilen der Aufbewahrungsvorrichtung, in einer Greifhöhe, beispielsweise in einer Höhe von 1m bis 1,5 m über dem Boden, an einer Wand montiert sein kann. Eine solche Ausführung hat den ganz besonderen Vorteil, dass die Aufbewahrungsvorrichtung auch dann einfach bedient werden kann, wenn sie an Stellen innerhalb eines Raumes, wie einer Zimmers, einer Garage oder eines Kellerraumes, montiert ist, die für eine Person ohne zusätzliche Hilfsmittel, wie beispielsweise eine Leiter, nicht erreichbar sind. Beispielsweise kann die Aufbewahrungsvorrichtung an einer hohen Decke, beispielsweise in einer Garage, montiert sein, während der per Kabel angebundene Bedienschalter auf der üblichen Höhe eines Lichtschalters angebracht ist.

Bei einer ganz besonders vorteilhaften Ausführung ist eine kabellose Fernbedienung, insbesondere eine Funkfernbedienung, vorhanden, mittels der der Antriebsmotor steuerbar ist. Eine solche Ausführung hat ebenfalls den ganz besonderen Vorteil, dass die Aufbewahrungsvorrichtung auch dann einfach bedient werden kann, wenn sie an Stellen innerhalb eines Raumes montiert ist, die für eine Person ohne zusätzliche Hilfsmittel nicht erreichbar sind. Darüber hinaus hat diese Ausführung den ganz besonderen Vorteil, dass nur derjenige den (vorzugsweise an einem ohne Hilfsmittel unzugänglichen Ort, beispielsweise unmittelbar unter einer hohen Decke) verstauten Gegenstand herab lassen kann, der im Besitz der Fernbedienung ist. Bei einer solchen Ausführung dient die Fernbedienung als elektronischer Schlüssel, der es ausschließlich dem Besitzer der Fernbedienung erlaubt, an den verstauten Gegenstand zu gelangen.

Die Fernbedienung kann insbesondere auch ein Smartphone sein, das beispielsweise eine App zur Steuerung der Aufbewahrungsvorrichtung beinhaltet. Insbesondere bei einer solchen Ausführung kann die Steuerung der Aufbewahrungsvorrichtung per Bluetooth oder per WLAN oder über das Internet erfolgen. Insbesondere kann auch vorgesehen sein, dass die Aufbewahrungsvorrichtung dazu ausgebildet ist, in ein Funknetzwerk, insbesondere in ein WLAN-Netzwerk, eingebunden zu werden und über eine ebenfalls in das Funknetzwerk eingebundene Fernbedienung gesteuert zu werden.

Die Aufbewahrungsvorrichtung kann vorteilhaft eine Halterung aufweisen, die dazu ausgebildet und bestimmt ist, an einer Wand oder an einer Decke befestigt zu werden und die als Drehmomentabstützung für den Antriebsmotor fungiert. Die Halterung kann beispielsweise durch ein Rahmengestell, insbesondere aus Metallstreben, gebildet sein.

Die Halterung kann außerdem ein Gehäuse tragen, das zumindest die Wickelwelle umgibt. Eine solche Ausführung hat den besonderen Vorteil, dass das Gehäuse, beispielsweise für Wartungsarbeiten, abgenommen werden kann, während die übrigen Teile der Aufbewahrungsvorrichtung in der Montageposition verbleiben können. Alternativ ist es auch möglich, dass die Halterung durch das Gehäuse gebildet ist. Eine solche Ausführung kommt mit besonders wenigen Bauteilen aus und kann besonders kompakt ausgebildet werden.

Das Gehäuse schützt die Wickelwelle und den darin angeordneten Antriebsmotor vor äußeren Einflüssen, insbesondere vor Verschmutzung. Insbesondere können auch elektrische und/oder elektronische Bauteile, wie beispielsweise eine Steuerungsvorrichtung oder eine Ladeelektronik für verstaute elektrische Fahrräder und/oder ein Energiespeicher, geschützt innerhalb des Gehäuses angeordnet sein. Für das Zugmittel kann das Gehäuse eine Auslassöffnung aufweisen. Fall mehrere Zugmittel vorhanden sind, kann das Gehäuse eine Auslassöffnung für jedes Zugmittel aufweisen. Es ist alternativ auch möglich, dass das Gehäuse für zwei oder mehr Zugmittel eine gemeinsame Auslassöffnung aufweist.

Das Zugmittel kann beispielsweise ein Seil, ein Band, insbesondere ein Textilband, eine Kette oder eine Perlschnur aufweisen. Letztlich gibt es hinsichtlich der Art des flexiblen Bandes keine grundsätzlichen Beschränkungen. Wenn mehrere Zugmittel vorhanden sind, können diese vorteilhaft gleichartig ausgebildet sein.

Vorzugsweise weist die Aufbewahrungsvorrichtung mehrere, insbesondere genau zwei, Zugmittel auf. Eine solche Ausführung erlaubt es, zu verstauende Gegenstände sicher anzukoppeln. Hierbei kann vorteilhaft insbesondere vorgesehen sein, dass die Zugmittel an ein und dieselbe Wickelwelle angebunden sind. Beim Anheben eines aufzubewahrenden Gegenstandes werden hierbei beide Zugmittel gleichzeitig auf ein und dieselbe Wickelwelle aufgewickelt. Beim Absenken des Gegenstandes werden beide Zugmittel gleichzeitig von dieser Wickelwelle wieder abgewickelt. Insbesondere kann die Aufbewahrungsvorrichtung ausschließlich eine einzige Wickelwelle aufweisen. Diese Ausführung hat den Vorteil, dass vermieden wird, mehrere Antriebsmotore gleichzeitig und/oder synchron ansteuern zu müssen. Außerdem kann hierbei vorteilhaft vorgesehen sein, dass die Länge der Wickelwelle (in Richtung ihrer Rotationsachse) größer ist, als der Abstand der, vorzugsweise parallel verlaufenden, Zugmittel. Auf diese Weise kann vorteilhaft auf eine zusätzliche Umlenkung, beispielsweise in Form einer Umlenkrolle oder eines Umlenkrades, für die Zugmittel verzichtet werden. Insbesondere haben diese Ausführungen den Vorteil, dass ein Abstand der, vorzugsweise parallel verlaufenden, Zugmittel im Bereich von 50 cm bis 90 cm, insbesondere im Bereich von 55 cm bis 65 cm. Insbesondere kann der Horizontalabstand vorteilhaft 60 cm, einfach und vorzugsweise ohne zusätzliche Umlenkung eines der Zugmittel realisierbar ist.

Alternativ kann vorteilhaft auch vorgesehen sein, dass die Aufbewahrungsvorrichtung mehrere Wickelwellen aufweist, die gemeinsam von demselben Antriebsmotor angetrieben werden. Eine solche Ausführung hat ebenfalls den Vorteil, dass vermieden wird, mehrere Antriebsmotore gleichzeitig und/oder synchron ansteuern zu müssen Vorzugeweise sind die Rotationsachsen der Wickelwellen koaxial oder parallel zueinander ausgerichtet. Außerdem kann hierbei vorteilhaft vorgesehen sein, dass der Abstand der Wickelwellen dem Abstand der, vorzugsweise parallel verlaufenden, Zugmittel entspricht. Auf diese Weise kann vorteilhaft auf eine zusätzliche Umlenkung, beispielsweise in Form einer Umlenkrolle oder eines Umlenkrades, für die Zugmittel verzichtet werden. Insbesondere haben diese Ausführungen den Vorteil, dass ein Abstand der, vorzugsweise parallel verlaufenden, Zugmittel im Bereich von 50 cm bis 90 cm, insbesondere im Bereich von 55 cm bis 65 cm. Insbesondere kann der Horizontalabstand vorteilhaft 60 cm, einfach und vorzugsweise ohne zusätzliche Umlenkung eines der Zugmittel realisierbar ist.

Bei einer besonderen Ausführung liegt der Horizontalabstand der beiden Zugmittel im Bereich von 50 cm bis 90 cm, insbesondere im Bereich von 55 cm bis 65 cm. Insbesondere kann der Horizontalabstand vorteilhaft 60 cm betragen. Diese Horizontalabstände sind besonders vorteilhaft, wenn Fahrräder verstaut der sollen. Zum Verstauen eines Fahrrades kann beispielsweise eines der Zugmittel an den Lenker oder dem Vorbau angekoppelt werden, während das andere Zugmittel an den Sattel angekoppelt wird.

Bei einer ganz besonders vorteilhaften Ausführung ist der Horizontalabstand der Zugmittel, insbesondere stufenlos, einstellbar. Diese Ausführung kann vorteilhaft individuell auf den zu verstauenden Gegenstand bzw. die zu verstauenden Gegenstände eingestellt werden.

Um die Aufbewahrungsvorrichtung flexibel und individuell auf den zu verstauenden Gegenstand bzw. die zu verstauenden Gegenstände einstellen zu können, kann wenigstens eines der mehreren Zugmittel derart ausgebildet sein, dass dessen Länge, insbesondere stufenlos, veränderbar ist. Hierzu kann beispielsweise ein Gurtversteller, wie bei dem Tragegurt eines Rucksacks, und/oder eine in der Schlaufengröße verstellbare Schlaufe, die auch als Ankoppelelement zum Ankoppeln einer zu hebenden Last fungieren kann, vorhanden sein.

Ganz allgemein gilt, dass die Zugmittel unterschiedlich lang sein können, wobei die Längendifferenz der Zugmittel vorzugsweise einstellbar ist. Unterschiedlich lange Zugmittel haben den besonderen Vorteil, dass beispielsweise der Höhenunterschied zwischen dem Sattel und dem Lenker Fahrrades, das aufbewahrt werden soll, durch die Längendifferenz der Zugmittel ausgeglichen werden kann, so dass das Fahrrad trotz des Höhenunterschied zwischen dem Sattel und dem Lenker in der Aufbewahrungsposition horizontal hängen kann.

Vorzugsweise weist wenigstens eines der Zugmittel an seinem freien Ende ein Ankoppelelement zum Ankoppeln einer zu hebenden Last auf. Beispielsweise kann das Ankoppelelement als, insbesondere verstellbare, Schlaufe ausgebildet sein. Vorzugsweise kann die Weite der Schlaufe, insbesondere stufenlos, eingestellt werden. Die Schlaufe kann beispielsweise dadurch gebildet sein, dass ein Endabschnitt eines Bandes des Zugmittels zurückgeschlagen und an einem Mittelabschnitt des Bandes, beispielsweise mittels eines Klettverschlusses, befestigt ist. Hierzu kann der Endabschnitt beispielsweise mit Kletthaken versehen sein, während der Mittelabschnitt 14 ein Flauschband trägt, oder umgekehrt.

Ganz allgemein kann vorteilhaft vorgesehen sein, dass das Ankoppelelement einen Klettverschluss aufweist. Eine solche Ausführung ist besonders flexibel an unterschiedliche zu verstauende Gegenstände ankoppelbar.

Bei einer besonderen Ausführung weist das Ankoppelelement einen Haken auf. Der Haken kann in einen zu verstauenden Gegenstand eingehakt werden, um den Gegenstand an die Aufbewahrungsvorrichtung anzukoppeln. Insbesondere kann der Haken hinsichtlich Form und Größe speziell an den aufzubewahrenden Gegenstand angepasst sein.

Bei einer ganz besonders vorteilhaften Ausführung weist das Ankoppelelement eine Ablageplattform auf, auf der der aufzubewahrende Gegenstand abgelegt werden kann oder mehrere aufzubewahrende Gegenstände abgelegt werden können.

Die Aufbewahrungsvorrichtung kann wenigstens eine mechanische Sicherungsvorrichtung mit einem Schloss aufweisen, mittels der der aufzubewahrende Gegenstand mit der Aufbewahrungsvorrichtung wegnahmesicher verbunden werden kann. Die Sicherungsvorrichtung kann beispielsweise ein Drahtseil oder eine Kette aufweisen, die endseitig fest (und vorzugsweise nicht zerstörungsfrei lösbar) mit dem an der Decke oder an der Wand befestigten Teil der Aufbewahrungsvorrichtung verbunden ist. Das andere Ende des Drahtseiles oder der Kette wird mittels eines Schlosses, beispielsweise mittels eines Schlosses, beispielsweise mittels eines Vorhängeschlosses oder eines Bügelschlosses, mit dem aufzubewahrenden Gegenstand verbunden.

Bei einer besonders einfach handhabbaren Ausführung ist das Zugmittel Teil der Sicherungsvorrichtung. Insbesondere bei einer solchen Ausführung kann das Ankoppelelement ein Schloss aufweisen. Das Schloss kann insbesondere nach Art eines Vorhängeschlosses oder eines Bügelschlosses ausgebildet sein. Vorzugsweise sind die Zugmittel bei einer solchen Ausführung derart, insbesondere schnittfest, ausgeführt, dass sie nicht mit einem Messer oder einer Schere durchtrennt werden können. Der aufwickelbare Teil des Zugmittels kann hierfür beispielsweise als Drahtseil oder als Kette, insbesondere aus Metall, ausgebildet sein.

Die Aufbewahrungsvorrichtung kann dazu ausgebildet sein, an ein Stromnetz angeschlossen zu werden, das den Antriebsmotor mit elektrischer Energie versorgt.

Es ist alternativ jedoch auch möglich, dass die Aufbewahrungsvorrichtung einen elektrischen Energiespeicher, insbesondere einen Akku, aufweist, der Energie zum Betreiben des Antriebsmotors bereitstellt. Eine solche Aufbewahrungsvorrichtung kann vorteilhafter Weise auch in Räumen verwendet werden, in denen kein Stromnetzanschluss zur Verfügung steht. Der elektrischen Energiespeicher kann auch dazu dienen, elektrische Energie an einen aufzubewahrenden Gegenstand abzugeben. Auf diese Weise ist es beispielsweise ermöglicht, den Akku eines aufzubewahrenden elektrischen Fahrrades während der Aufbewahrungszeit aufzuladen.

Beispielsweise kann die Aufbewahrungsvorrichtung derart ausgebildet sein, dass der elektrische Energiespeicher für einen Ladevorgang, insbesondere werkzeugfrei und/oder zerstörungsfrei, entnommen und nach dem Aufladen, insbesondere werkzeugfrei und/oder zerstörungsfrei, wieder eingefügt werden kann. Hierzu kann die Aufbewahrungsvorrichtung vorteilhaft eine Aufnahme aufweisen, in die der Energiespeicher, beispielswiese rastend und/oder formschlüssig, einfügbar ist. Die Aufnahme kann beispielsweise in einem Gehäuse der Aufbewahrungsvorrichtung ausgebildet sein. Es kann hierbei insbesondere auch vorgesehen sein, dass eine Aufnahme zum Einstecken des Energiespeichers über ein Kabel angebunden ist. Dies ermöglicht es, den Energiespeicher an einem ohne zusätzliche Hilfsmittel, wie beispielsweise eine Leiter, zugänglichen Ort anzubringen, während die übrigen Teile der Aufbewahrungsvorrichtung an einem Ort angebracht sein können, beispielsweise unmittelbar an einer hohen Decke, der ohne zusätzliche Hilfsmittel nicht zugänglich ist.

Vorzugsweise ist die Aufnahme derart ausgebildet, dass beim Einfügen des Energiespeichers automatisch und ohne dass hierfür zusätzliche Handhabungsschritte erforderlich sind, auch eine elektrische Ankopplung des Energiespeichers, insbesondere an den Antriebsmotor und/oder eine elektrische Steuerungsvorrichtung und/oder an einen Steckverbinder zum Ausgeben von elektrischer Energie an einen externen Verbraucher, insbesondere den aufzubewahrenden Gegenstand, und/oder an einen Transformator und/oder an ein Schaltnetzteil erfolgt.

Bei einer vorteilhaften Ausführung weist die Aufbewahrungsvorrichtung einen elektrischen Steckverbinder zum Ausgeben von elektrischer Energie auf. Diese Ausführung hat den ganz besonderen Vorteil, dass aufzubewahrende Gegenstände, die einen elektrischen Stromanschluss benötigen, in der Aufbewahrungsposition mit elektrischer Energie versorgt werden können. Beispielsweise kann das Ladegerät eines aufzubewahrenden elektrischen Fahrrades angeschlossen werden.

Es ist, alternativ oder zusätzlich, auch möglich, dass die Aufbewahrungsvorrichtung einen Stromrichter, insbesondere einen Transformator oder ein Schaltnetzteil, aufweist. Insbesondere kann auf diese Weise beispielsweise ein Ladestrom, insbesondere ein Gleichstrom oder ein Niedervolt-Gleichstrom, für den aufzubewahrenden Gegenstand zur Verfügung gestellt werden. Dies ermöglicht es beispielsweise, einen Akku eines aufzubewahrenden elektrischen Fahrrades aufzuladen, ohne dass ein zusätzliches Ladegerät benötigt wird. Alternativ oder zusätzlich kann auch vorgesehen sein, dass elektrische Energie aus einem Energiespeicher der Aufbewahrungsvorrichtung dem Benutzer, beispielsweise zum Aufladen des Akkus eines Fahrrades, zur Verfügung gestellt wird.

Die Wickelwelle kann, aber nicht beansprucht, in einer zu ihrer Längserstreckungsrichtung senkrechten Ebene eine Kreisform aufweisen. Bei einer solchen Ausführung kann beispielsweise mit einer radial verlaufenden Schraube eine drehfeste Abbindung eines Abtriebselements des Antriebsmotors an die Wickelwelle hergestellt sein.

Die Wickelwelle weist erfindungsgemäß in einer zu ihrer Längserstreckungsrichtung senkrechten Ebene eine von der Kreisform abweichende Form auf. Insbesondere kann die Wickelwelle im Querschnitt mehreckig, insbesondere sechseckig oder achteckig, ausgebildet sein. Dies ermöglicht eine einfache, formschlüssige drehfeste Anbindung des entsprechend komplementär geformten Abtriebselements des Antriebsmotors. Beispielsweise kann die Wickelwelle eine im Querschnitt sechseckige oder achteckige Innenkontur (insbesondere regelmäßiges Sechseck oder regelmäßiges Achteck) aufweisen, während das Abtriebselement eine im Querschnitt entsprechende sechseckige oder achteckige Außenkontur aufweist.

Bei einer besonders vorteilhaften Ausführung weist die Wickelwelle wenigstens ein Wickelrad auf. Das Wickelrad kann beispielsweise auf einer Grundwelle der Wickelwelle drehfest befestigt sein. Vorzugsweise ist für jedes Zugmittel ein Wickelrad vorhanden. Das Wickelrad kann seitliche Begrenzungswangen zum Führen des Zugmittels bei einem Aufwickelvorgang aufweisen. Die Begrenzungswangen können mittels einer Nabe verbunden sein. Insbesondere kann der Abstand der Begrenzungswangen der Breite des Zugmittels in Axialrichtung entsprechen, so dass das Zugmittel bei einem Aufwickelvorgang derart aufgewickelt wird, dass die einzelnen Lagen des aufgewickelten Zugmittels radial übereinander liegen. Auf diese Weise sind vorteilhaft ein unkontrolliertes Aufwickeln und insbesondere ein Verheddern vermieden.

Von ganz besonderem Vorteil ist ein Aufbewahrungsvorrichtungssystem, das wenigstens zwei erfindungsgemäße Aufbewahrungsvorrichtungen aufweist. Hierbei kann vorteilhaft insbesondere vorgesehen sein, dass die Aufbewahrungsvorrichtungen synchron gesteuert sind und/oder dass eine Steuerungsvorrichtung vorhanden ist, die die Aufbewahrungsvorrichtungen synchron steuert. Es kann insbesondere eine Bedienungsvorrichtung vorhanden sein, mittels der beide Aufbewahrungsvorrichtungen gleichzeitig und synchron steuerbar sind. Die Bedienungsvorrichtung kann eine Fernbedienung, insbesondere eine Funkfernbedienung, sein.

Ein synchrones Steuern aller Aufbewahrungsvorrichtungen des Aufbewahrungsvorrichtungssystems hat den Vorteil, dass ein aufzubewahrender Gegenstand gemeinsam und gleichzeitig von mehreren Aufbewahrungsvorrichtungen in die Aufbewahrungsposition überführt und aus der Aufbewahrungsposition zurück gebracht werden kann oder dass mehrere aufzubewahrende Gegenstände gemeinsam und gleichzeitig von den mehreren Aufbewahrungsvorrichtungen des Aufbewahrungsvorrichtungssystems in die Aufbewahrungsposition überführt und aus der Aufbewahrungsposition zurück gebracht werden können. Ein solches Aufbewahrungsvorrichtungssystem kann insbesondere zum Einsatz kommen, wenn der aufzubewahrende Gegenstand besonders groß und/oder besonders schwer ist.

Bei einer besonderen Ausführung des Aufbewahrungsvorrichtungssystems weisen die Aufbewahrungsvorrichtungen ein gemeinsames Ankoppelelement zum Ankoppeln einer zu hebenden Last auf. Hierbei kann es sich beispielsweise um eine gemeinsame Ablageplattform oder ein gemeinsames Ablagenetz handeln, auf dem bzw. in dem aufzubewahrende Gegenstände abgelegt werden können.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen Aufbewahrungsvorrichtung,
- Fig. 2: ein zweites Ausführungsbeispiel einer erfindungsgemäßen Aufbewa hrungsvorrichtu ng,
- Fig. 3: ein drittes Ausführungsbeispiel einer erfindungsgemäßen Aufbewahrungsvorrichtung,
- Fig. 4: ein viertes Ausführungsbeispiel einer erfindungsgemäßen Aufbewahrungsvorrichtung,
- Fig. 5: ein fünftes Ausführungsbeispiel einer erfindungsgemäßen Aufbewahrungsvorrichtung,
- Fig. 6: das fünfte Ausführungsbeispiel einer erfindungsgemäßen Aufbewahrungsvorrichtung mit unterschiedlich lang eingestellten Zugmitteln,
- Fig. 7: ein sechstes Ausführungsbeispiel einer erfindungsgemäßen Aufbewahrungsvorrichtung,
- Fig. 8: das sechste Ausführungsbeispiel mit einem verstauten Fahrrad,
- Fig. 9: ein Ausführungsbeispiel eines erfindungsgemäßen Aufbewahrungsvorrichtungssystems, und
- Fig. 10: ein siebentes Ausführungsbeispiel einer erfindungsgemäßen Aufbewahrungsvorrichtung.

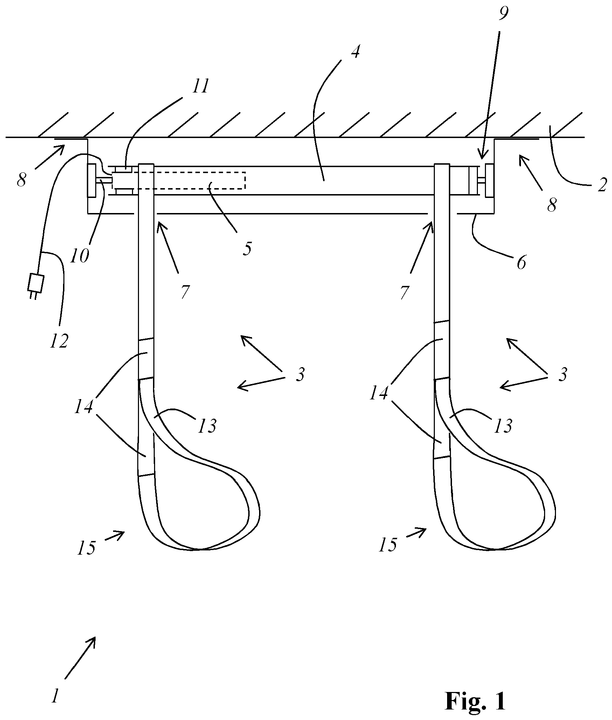

Fig. 1 zeigt ein erstes Ausführungsbeispiel einer erfindungsgemäßen Aufbewahrungsvorrichtung 1, die an einer Decke 2 befestigt ist. Die Aufbewahrungsvorrichtung 1 weist eine Hebevorrichtung mit zwei flexiblen Zugmitteln 3 auf. Die Hebevorrichtung weist außerdem eine Wickelwelle 4 auf, auf die die Zugmittel 3 aufwickelbar sind. Die Zugmittel 3 sind u.a. aus Bändern gefertigt, die insbesondere textile Bänder sein können.

An den freien Enden weisen die Zugmittel 3 jeweils ein als Schlaufe ausgebildetes Ankoppelelement 15 zum Ankoppeln eines zu verstauenden Gegenstandes, beispielsweise zum Ankoppeln eines Fahrrades oder eines Surfbretts, auf. Die Weite der Schlaufen kann stufenlos eingestellt werden. Die Schlaufe kann insbesondere dadurch gebildet sein, dass ein Endabschnitt 13 des jeweiligen Bandes zurückgeschlagen und an einem Mittelabschnitt 14 des Bandes, beispielsweise mittels eines Klettverschlusses, befestigt ist. Hierzu kann der Endabschnitt 13 mit (nicht dargestellten) Kletthaken versehen sein, während der Mittelabschnitt 14 ein (nicht näher dargestelltes) Flauschband trägt.

Die Aufbewahrungsvorrichtung 1 weist ein Gehäuse 6 auf, das die Wickelwelle 4 schützend umgibt. Das Gehäuse 6 weist für jedes der Zugmittel 3 eine Auslassöffnung 7 auf. Das Gehäuse 6 weist außerdem Befestigungsabschnitte 8 auf, mittels denen eine Befestigung der Aufbewahrungsvorrichtung 1an der Decke 2 ermöglicht ist. Beispielsweise können die Befestigungsabschnitte 8 (nicht dargestellte) Durchgangsöffnungen für (nicht dargestellte) Befestigungsschrauben aufweisen.

Die Wickelwelle 4 ist in dem Gehäuse 6 rotierbar gelagert. An einem Ende der Wickelwelle 4 ist ein Drehlager 9 montiert, mit dem die Wickelwelle 4 relativ zu dem Gehäuse 6 rotierbar gehaltert ist.

In das andere Ende der Wickelwelle 4 ist ein Antriebsmotor 5 eingefügt, der als Rohrmotor ausgebildet ist. Mit dem Antriebsmotor 5 kann die Wickelwelle 4 zur Rotation angetrieben werden, um die Zugmittel 3 wahlweise (je nach Drehrichtung) auf die Wickelwelle 4 aufzuwickeln oder von der Wickelwelle 4 abzuwickeln. Die Wickelwelle 4 ist an diesem Ende über den Antriebsmotor 5, der sich mittels einer Drehmomentstütze 10 an dem Gehäuse 6 abstützt, gehalten.

Der Antriebsmotor 5 weist ein Abtriebselement 11 auf, das drehfest mit der Wickelwelle 4 in Wirkverbindung steht. Bei der drehfesten Verbindung handelt es sich vorteilhaft um eine Formschlussverbindung. Eine Formschlussverbindung ist besonders vorteilhaft, wenn die Wickelwelle 4 in einer zu ihrer Längserstreckungsrichtung senkrechten Ebene eine von der Kreisform abweichende Form, beispielsweise die Form eines regelmäßigen Sechs- oder Achtecks, aufweist.

Das Gehäuse 6 fungiert als Halterung, über die das von dem Antriebsmotor 5 erzeugte Drehmoment an der Decke 2 abgestützt wird.

Bei diesem Ausführungsbeispiel wird der Antriebsmotor 5 mittels eines elektrischen Anschlusskabels 12 an ein Stromnetz angeschlossen.

Um einen Gegenstand zu verstauen, werden die Zugmittel 3 zunächst so weist von der Wickelwelle 4 abgewickelt, bis sie von dem am Boden stehenden Bediener zum Ankoppeln des Gegenstandes erreichbar sind. Die herabhängenden freien Enden der Zugmittel 3 können jeweils ein (nicht dargestelltes) Gewichtselement aufweisen, das gewährleistet, dass die jeweils gerade abgewickelten Abschnitte ohne sich zu verheddern durch die Gewichtskraft aus den Austrittsöffnungen 7 der Gehäuses 6 gezogen werden.

Anschließend kann der Bediener den zu verstauenden Gegenstand, beispielsweise ein Fahrrad (oder mehrere Fahrräder) oder ein Surfbrett, mittels der Ankoppelelemente 15 ankoppeln. Danach werden die Zugmittel 3 wieder auf die Wickelwelle 4 aufgewickelt, wodurch der angekoppelte Gegenstand nach oben in eine Aufbewahrungsposition gezogen wird. Der Raum unter dem Gegenstand steht dann vorteilhafter Weise weiterhin zur freien Verfügung.

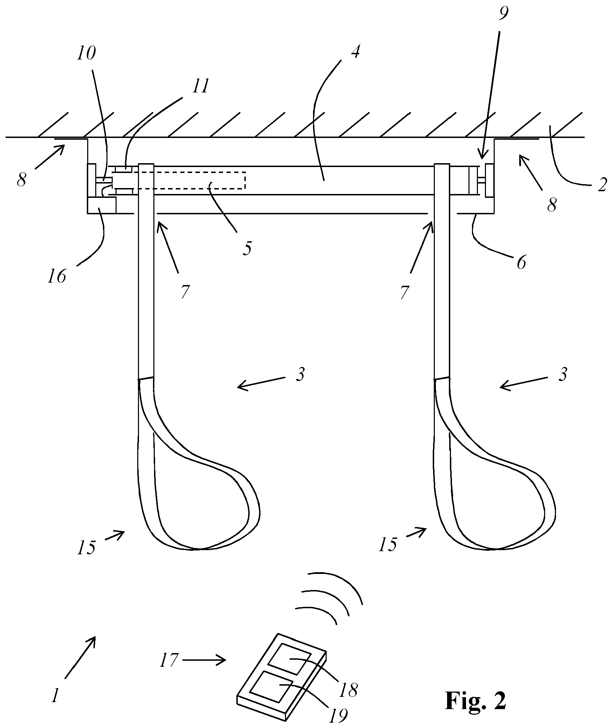

Fig. 2 zeigt ein zweites Ausführungsbeispiel einer erfindungsgemäßen Aufbewahrungsvorrichtung 1. Im Unterscheid zu der Aufbewahrungsvorrichtung 1 gemäß dem ersten Ausführungsbeispiel weist die in Figur 2 dargestellte Aufbewahrungsvorrichtung 1 kein Anschlusskabel 12 auf. Stattdessen ist ein elektrischer Energiespeicher 16 vorhanden, der Energie zum Betreiben des Antriebsmotors 5 bereitstellt. Der elektrische Energiespeicher 16 kann vorteilhaft als Akku ausgebildet sein. Der elektrische Energiespeicher 16 kann für einen Ladevorgang aus dem Gehäuse 6 entnommen und nach dem Aufladen wieder eingefügt werden.

Zur Steuerung des Antriebsmotors 5 ist bei diesem Ausführungsbeispiel eine Funkfernbedienung 17 vorhanden. Die Funkfernbedienung 17 weist eine erste Taste 18 für "Aufwärts" und eine zweite Taste 19 für "Abwärts" auf. Beim Drücken der ersten Taste 18 für "Aufwärts" wird ein angekoppelter Gegenstand nach oben in die Aufbewahrungsposition gezogen. Beim der zweiten Taste für "Abwärts" wird der Gegenstand wieder abgelassen.

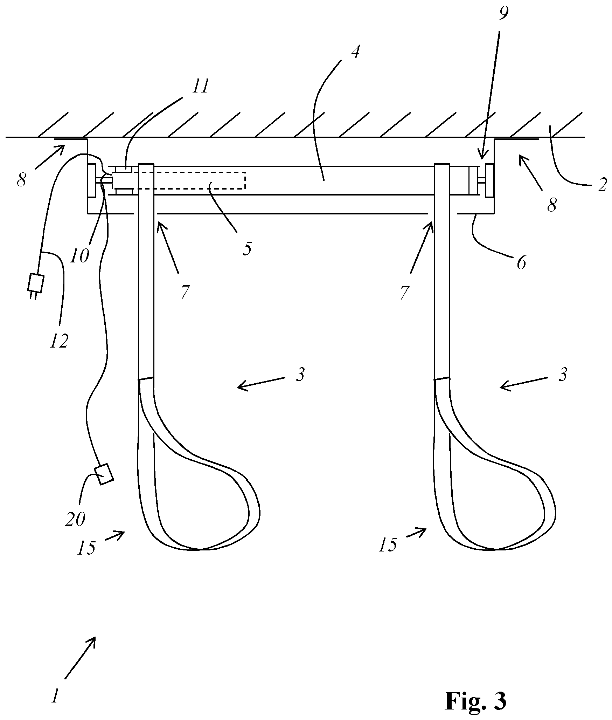

Fig. 3 zeigt ein drittes Ausführungsbeispiel einer erfindungsgemäßen Aufbewahrungsvorrichtung 1. Diese Aufbewahrungsvorrichtung 1 ist im Wesentlichen genauso aufgebaut, wie die in Figur 1 dargestellte Aufbewahrungsvorrichtung 1. Allerdings stellt die Aufbewahrungsvorrichtung 1 gemäß dem dritten Ausführungsbeispiel dem Benutzer einen elektrischen Steckverbinder 20, der insbesondere eine Buchse für einen Netzstecker sein kann, zum Ausgeben von elektrischer Energie zur Verfügung. An den elektrischen Steckverbinder 20 kann der Benutzer beispielsweise ein Ladegerät zum Aufladen eines elektrischen Fahrrades, das mittels der Aufbewahrungsvorrichtung 1 verstaut wird, anschließen.

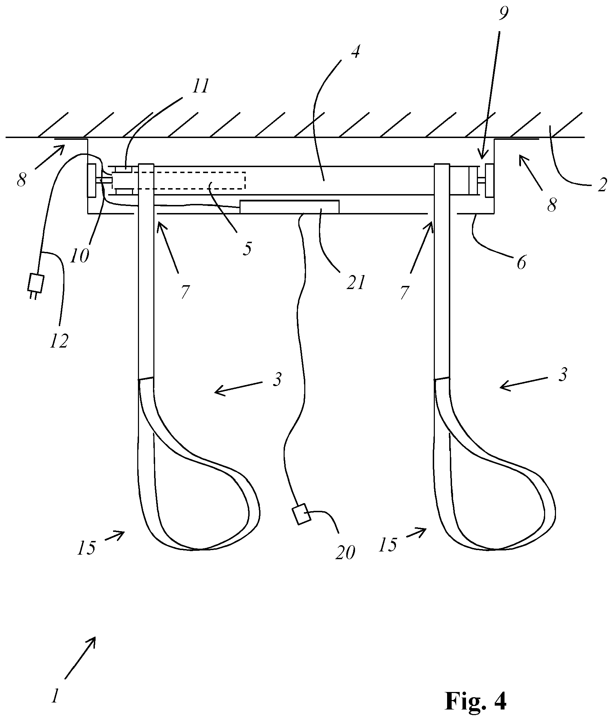

Fig. 4 zeigt ein viertes Ausführungsbeispiel einer erfindungsgemäßen Aufbewahrungsvorrichtung 1. Diese Aufbewahrungsvorrichtung 1 beinhaltet einen Stromrichter 21, insbesondere einen Transformator oder ein Schaltnetzteil, der als Ladegerät fungiert und eine Niedervoltgleichspannung, beispielsweise zum Aufladen eines elektrischen Fahrrades, das mittels der Aufbewahrungsvorrichtung 1 verstaut wird, zur Verfügung stellt.

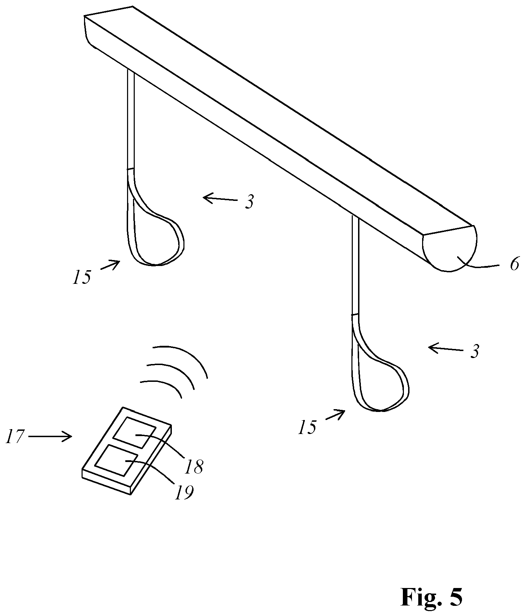

Fig. 5 zeigt in einer perspektivischen Darstellung ein fünftes Ausführungsbeispiel einer erfindungsgemäßen Aufbewahrungsvorrichtung 1, die dazu ausgebildet und bestimmt ist, an einer Decke, beispielsweise einer Zimmerdecke, einer Garagendecke oder einer Kellerdecke, vorzugsweise unbeweglich, montiert zu werden.

Die Aufbewahrungsvorrichtung 1 weist ein Gehäuse 6 auf, das die (in dieser Figur nicht dargestellte) Wickelwelle 4 samt dem (ebenfalls nicht dargestellten) Antriebsmotor 5 umgibt. Die Hebevorrichtung der Aufbewahrungsvorrichtung 1 weist zwei flexible Zugmittel 3 auf.

An den freien Enden weisen die Zugmittel 3 jeweils ein als Schlaufe ausgebildetes Ankoppelelement 15 zum Ankoppeln einer zu hebenden Last, beispielsweise zum Ankoppeln eines Fahrrades oder eines Surfbretts oder von anderen aufzubewahrenden Gegenständen, auf.

Zur Steuerung des Antriebsmotors 5 ist bei diesem Ausführungsbeispiel eine Funkfernbedienung 17 vorhanden. Die Funkfernbedienung 17 weist eine erste Taste 18 für "Aufwärts" und eine zweite Taste für "Abwärts" auf. Beim Drücken der ersten Taste 18 für "Aufwärts" wird ein angekoppelter Gegenstand nach oben in die Aufbewahrungsposition gezogen. Beim der zweiten Taste für "Abwärts" wird der Gegenstand wieder abgelassen.

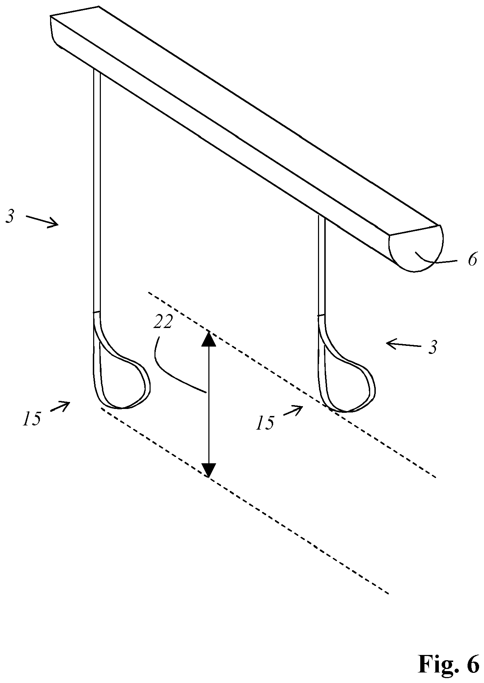

Die Länge der Zugmittel 3 kann, vorzugsweise stufenlos, eingestellt werden. Insbesondere können die Zugmittel 3 unterschiedlich lang eingestellt werden, was in Figur 6 dargestellt ist. Beispielsweise kann eine Längendifferenz 22 eingestellt werden.

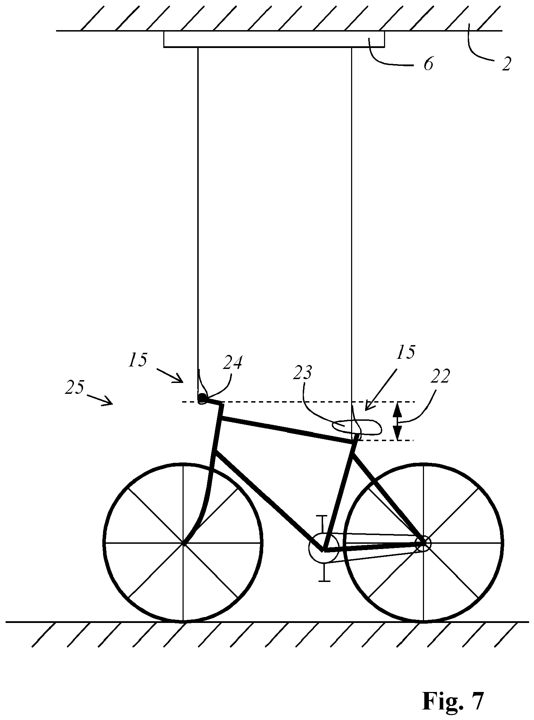

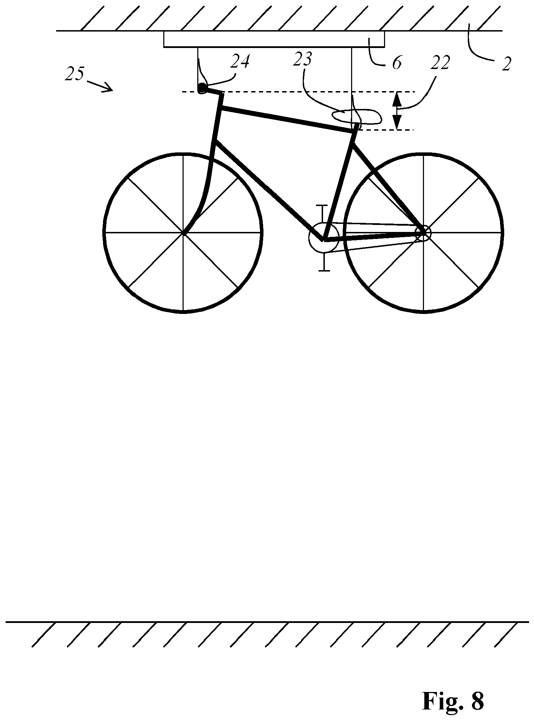

Unterschiedlich lange Zugmittel 3 haben den besonderen Vorteil, dass beispielsweise der Höhenunterschied zwischen dem Sattel 23 und dem Lenker 24 eines Fahrrades 25, das aufbewahrt werden soll, durch die Längendifferenz 22 ausgeglichen werden kann, was in den Figuren 7 und 8 schematisch dargestellt ist.

Fig. 7 zeigt die Situation beim Ankoppeln eines aufzubewahrenden Fahrrades 25 in Bezug auf ein sechstes Ausführungsbeispiel einer erfindungsgemäßen Aufbewahrungsvorrichtung. Das Fahrrad 25 wird mittels der Ankoppelelemente 15 angekoppelt. Danach werden die Zugmittel 3 wieder auf die (in dieser Figur nicht dargestellte) Wickelwelle 4 aufgewickelt, wodurch das angekoppelte Fahrrad 25 nach oben in eine Aufbewahrungsposition gezogen wird. Der Raum unter dem Gegenstand steht dann vorteilhafter Weise weiterhin zur freien Verfügung, was in Figur 8 dargestellt ist.

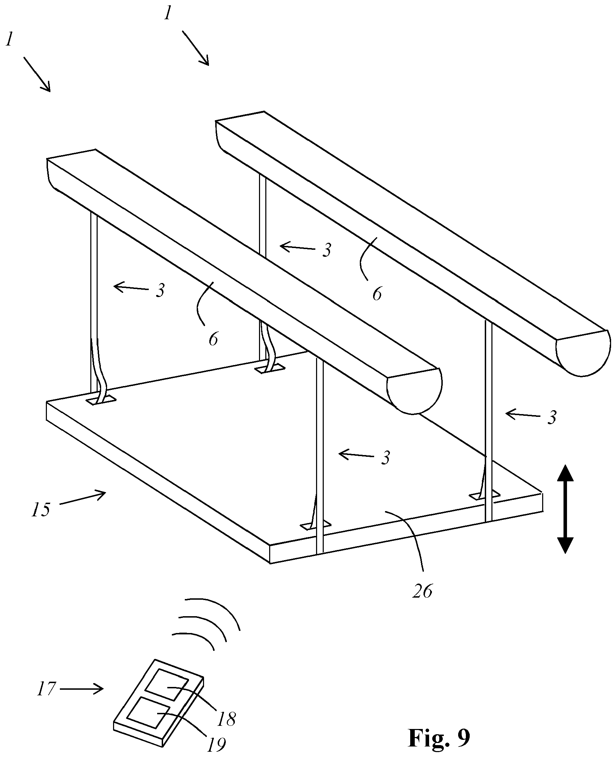

Figur 9 zeigt ein Ausführungsbeispiel eines erfindungsgemäßen Aufbewahrungsvorrichtungssystems, das zwei erfindungsgemäße Aufbewahrungsvorrichtungen 1 umfasst.

Die Aufbewahrungsvorrichtungen 1 weisen ein gemeinsames Ankoppelelement 15 zum Ankoppeln einer zu hebenden Last auf, das als Ablageplattform 26 ausgebildet ist auf. Auf der Ablageplattform 26 können aufzubewahrende (in der Figur nicht dargestellte) Gegenstände abgelegt werden. Anschließend kann die Ablageplattform 26 nach oben in die Aufbewahrungsposition überführt werden.

Es ist eine Funkfernbedienung 17 vorhanden, mittels der beide Aufbewahrungsvorrichtungen 1 gleichzeitig und synchron steuerbar sind, so dass die Ablageplattform 26 sowohl beim Anheben als auch beim Absenken stets horizontal ausgerichtet bleibt. Die Funkfernbedienung 17 weist eine erste Taste 18 für "Aufwärts" und eine zweite Taste für "Abwärts" auf. Beim Drücken der ersten Taste 18 für "Aufwärts" wird die Ablageplattform 26 nach oben in die Aufbewahrungsposition gezogen. Beim der zweiten Taste für "Abwärts" wird die Ablageplattform 26 wieder abgelassen.

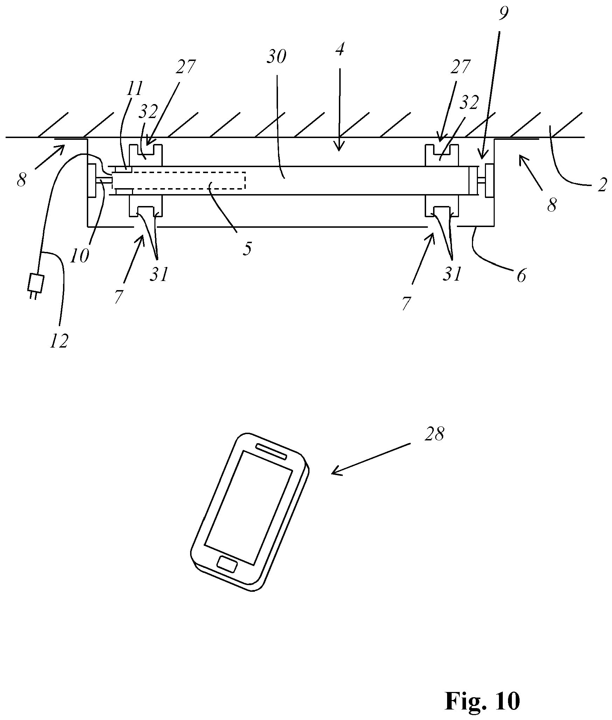

Fig. 10 zeigt ein siebentes Ausführungsbeispiel einer erfindungsgemäßen Aufbewahrungsvorrichtung 1, wobei die Zugmittel der besseren Übersichtlichkeit halber nicht eingezeichnet sind. Im Unterscheid zu der Aufbewahrungsvorrichtung 1 gemäß dem ersten Ausführungsbeispiel hat die in Figur 10 dargestellte Aufbewahrungsvorrichtung 1 eine Wickelwelle 4, die zwei Wickelräder 27 aufweist. Jedes Wickelrad 27 ist auf einer Grundwelle 30 der Wickelwelle 4 drehfest befestigt. Für jedes (in dieser Figur nicht dargestelltes) Zugmittel 3 ist ein eigenes Wickelrad 27 vorhanden. Jedes Wickelrad 27 weist seitliche Begrenzungswangen 31 zum Führen des Zugmittels bei einem Aufwickelvorgang auf. Die Begrenzungswangen 31 sind mittels einer Nabe 32 verbunden, wobei der Durchmesser der Nabe 32 größer ist, als der Durchmesser der Grundwelle 30. Die (nicht dargestellten) Zugmittel 3 werden bei einem Aufwickelvorgang auf die Naben 32 aufgewickelt. Der Abstand der Begrenzungswangen 31 entspricht jeweils vorzugsweise der Breite des (nicht dargestellten) Zugmittels.

Die Fernbedienung ist bei diesem Ausführungsbeispiel ein Smartphone 28, das eine App zur Steuerung der Aufbewahrungsvorrichtung 1 beinhaltet. Insbesondere bei einer solchen Ausführung kann die Steuerung der Aufbewahrungsvorrichtung per Bluetooth oder per WLAN oder über das Internet erfolgen. Insbesondere kann auch vorgesehen sein, dass die Aufbewahrungsvorrichtung 1 dazu ausgebildet ist, in ein Funknetzwerk, insbesondere in ein WLAN-Netzwerk, eingebunden zu werden und über das ebenfalls in das Funknetzwerk eingebundene Smartphone 28 gesteuert zu werden.

### Bezugszeichenliste:

- 1: Aufbewahrungsvorrichtung
- 2: Decke
- 3: Zugmittel
- 4: Wickelwelle
- 5: Antriebsmotor
- 6: Gehäuse
- 7: Auslassöffnung
- 8: Befestigungsabschnitt
- 9: Drehlager
- 10: Drehmomentstütze
- 11: Abtriebselement
- 12: elektrisches Anschlusskabel
- 13: Endabschnitt
- 14: Mittelabschnitt
- 15: Ankoppelelement
- 16: elektrischer Energiespeicher
- 17: Funkfernbedienung
- 18: erste Taste 18 für "Aufwärts"
- 19: zweite Taste 19 für "Abwärts"
- 20: elektrischer Steckverbinder
- 21: Stromrichter
- 22: Längendifferenz
- 23: Sattel
- 24: Lenker
- 25: Fahrrad
- 26: Ablageplattform
- 27: Wickelrad
- 28: Smartphone
- 29: Grundwelle

## Patentansprüche

1. Aufbewahrungsvorrichtung (1), insbesondere für Sportgeräte, die dazu ausgebildet und bestimmt ist, an einer Decke (2) oder einer Wand montiert zu werden und die eine Hebevorrichtung mit wenigstens einem flexiblen Zugmittel (3) aufweist, wobei die Hebevorrichtung eine Wickelwelle (4), auf die das Zugmittel (3) aufwickelbar ist, wobei die Hebevorrichtung einen als Rohrmotor ausgebildeten und wenigstens teilweise in der Wickelwelle (4) angeordneten Antriebsmotor zum Antreiben der Wickelwelle aufweist, **dadurch gekennzeichnet, dass** die Wickelwelle (4) in einer zu ihrer Längserstreckungsrichtung senkrechten Ebene eine von der Kreisform abweichende Form aufweist und der Antriebsmotor (5) ein Abtriebselement (11) aufweist, das formschlüssig in der Wickelwelle (4) angeordnet ist.

2. Aufbewahrungsvorrichtung (1) nach Anspruch 1, **dadurch gekennzeichnet, dass** dem Antriebsmotor (5) ein, insbesondere in der Wickelwelle (4) angeordnetes, Getriebe triebtechnisch nachgeschaltet ist und/oder dass eine Fernbedienung, insbesondere eine Funkfernbedienung (17) oder ein Smartphone, vorhanden ist, mittels der der Antriebsmotor (5) steuerbar ist.

3. Aufbewahrungsvorrichtung (1) nach Anspruch 1 oder 2, **gekennzeichnet durch** eine Halterung, die dazu ausgebildet und bestimmt ist, an einer Wand oder an einer Decke (2) befestigt zu werden und die als Drehmomentabstützung für den Antriebsmotor (5) fungiert.

4. Aufbewahrungsvorrichtung (1) nach einem der Ansprüche 1 bis 3, **gekennzeichnet durch** ein Gehäuse (6), das zumindest die Wickelwelle (4) umgibt, oder **durch** ein Gehäuse (6), das zumindest die Wickelwelle (4) umgibt und das eine Auslassöffnung für das Zugmittel (3) aufweist.

5. Aufbewahrungsvorrichtung (1) nach Anspruch 3 und Anspruch 4, **dadurch gekennzeichnet, dass** die Halterung das Gehäuse (6) trägt oder dass die Halterung durch das Gehäuse (6) gebildet ist.

6. Aufbewahrungsvorrichtung (1) nach einem der Ansprüche 1 bis 5, **dadurch gekennzeichnet, dass**
a. mehrere, insbesondere genau zwei, Zugmittel (3) vorhanden sind, und/oder dass
b. zwei Zugmittel (3) vorhanden sind, deren Horizontalabstand im Bereich von 50 cm bis 90 cm, insbesondere im Bereich von 55 cm bis 65 cm liegt, oder 60 cm beträgt, und/oder dass
c. zwei Zugmittel (3) vorhanden sind, deren Horizontalabstand, insbesondere stufenlos, einstellbar ist, und/oder dass
d. zwei Zugmittel (3) vorhanden sind, wobei die Länge wenigstens eines der Zugmittel (3) einstellbar ist, und/oder dass
e. zwei unterschiedlich lange Zugmittel (3) vorhanden sind, und/oder dass
f. zwei zueinander parallele Zugmittel (3) vorhanden sind.

7. Aufbewahrungsvorrichtung nach einem der Ansprüche 1 bis 6, **dadurch gekennzeichnet, dass**
a. mehrere Zugmittel (3), insbesondere genau zwei Zugmittel (3), an die Wickelwelle angekoppelt sind, die gleichzeitig auf die Wickelwelle (4) aufwickelbar sind und gleichzeitig von der Wickelwelle (4) abwickelbar sind, oder dass
b. mehrere Zugmittel (3), insbesondere genau zwei Zugmittel (3), an die Wickelwelle (4) angekoppelt sind, die gleichzeitig auf die Wickelwelle (4) aufwickelbar sind und gleichzeitig von der Wickelwelle (4) abwickelbar sind, wobei die Länge der Wickelwelle (4) größer ist, als der Parallelabstand der Zugmittel (3), oder dass
c. mehrere Zugmittel (3), insbesondere genau zwei Zugmittel (3), und mehrere Wickelwellen (4) vorhanden sind, die gemeinsam von demselben Antriebsmotor (5) angetrieben werden, oder dass
d. mehrere Zugmittel (3), insbesondere genau zwei Zugmittel (3), und mehrere Wickelwellen (4) vorhanden sind, die gemeinsam von demselben Antriebsmotor (5) angetrieben werden, wobei der Parallelabstand der Zugmittel dem Abstand der Wickelwellen (4) entspricht.

8. Aufbewahrungsvorrichtung (1) nach einem der Ansprüche 1 bis 7, **dadurch gekennzeichnet, dass**
a. das Zugmittel (3) an seinem freien Ende ein Ankoppelelement (15) zum Ankoppeln einer zu hebenden Last aufweist oder dass jedes der Zugmittel (3) an seinem freien Ende eine Ankoppelelement (15) zum Ankoppeln einer zu hebenden Last aufweist, oder dass
b. das Zugmittel (3) an seinem freien Ende ein Ankoppelelement (15) zum Ankoppeln einer zu hebenden Last aufweist oder dass jedes der Zugmittel (3) an seinem freien Ende eine Ankoppelelement (15) zum Ankoppeln einer zu hebenden Last aufweist, wobei das Ankoppelelement (15) als, insbesondere verstellbare, Schlaufe ausgebildet ist und/oder einen Klettverschluss aufweist und/oder einen Haken aufweist und/oder eine Ablageplattform aufweist.

9. Aufbewahrungsvorrichtung (1) nach einem der Ansprüche 1 bis 8, **gekennzeichnet durch**
a. einen, insbesondere werkzeugfrei und/oder zerstörungsfrei entnehmbaren, elektrischen Energiespeicher (16), insbesondere einen Akku, oder **durch**
b. einen, insbesondere werkzeugfrei und/oder zerstörungsfrei entnehmbaren, elektrischen Energiespeicher (16), insbesondere einen Akku, der Energie zum Betreiben des Antriebsmotors und/oder zum Ausgeben an den aufzubewahrenden Gegenstand bereitstellt.

10. Aufbewahrungsvorrichtung (1) nach Anspruch 9, **gekennzeichnet durch** eine Aufnahme, in die der elektrische Energiespeicher (16), insbesondere werkzeugfrei und/oder zerstörungsfrei wieder entnehmbar, einfügbar ist.

11. Aufbewahrungsvorrichtung (1) nach einem der Ansprüche 1 bis 10, **gekennzeichnet durch** einen elektrischen Steckverbinder zum Ausgeben von elektrischer Energie, insbesondere zum Ausgeben von elektrischer Energie an den aufzubewahrenden Gegenstand.

12. Aufbewahrungsvorrichtung (1) nach einem der Ansprüche 1 bis 11, **dadurch gekennzeichnet, dass** die Wickelwelle (4) im Querschnitt mehreckig, insbesondere sechseckig oder achteckig, ausgebildet ist.

13. Aufbewahrungsvorrichtungssystem, das wenigstens zwei Aufbewahrungsvorrichtungen (1) nach einem der Ansprüche 1 bis 12 aufweist.

14. Aufbewahrungsvorrichtungssystem nach Anspruch 13, **dadurch gekennzeichnet, dass**
a. die Aufbewahrungsvorrichtungen (1) synchron gesteuert sind und/oder dass eine Steuerungsvorrichtung vorhanden ist, die die Aufbewahrungsvorrichtungen (1) synchron steuert, und/oder dass
b. eine Bedienungsvorrichtung vorhanden ist, mittels der beide Aufbewahrungsvorrichtungen (1) gleichzeitig und synchron steuerbar sind, und/oder dass
c. eine Bedienungsvorrichtung vorhanden ist, mittels der beide Aufbewahrungsvorrichtungen (1) gleichzeitig und synchron steuerbar sind, wobei die Bedienungsvorrichtung eine Fernbedienung, insbesondere eine Funkfernbedienung (17) oder ein Smartphone, ist, und/oder dass
d. die Aufbewahrungsvorrichtungen (1) ein gemeinsames Ankoppelelement (15) zum Ankoppeln einer zu hebenden Last aufweisen, und/oder dass
e. die Aufbewahrungsvorrichtungen (1) ein gemeinsames Ankoppelelement (15) zum Ankoppeln einer zu hebenden Last aufweisen, das eine gemeinsame Ablageplattform (26) oder ein gemeinsames Ablagenetz aufweist.

## Claims

1. Storage device (1), in particular for sporting equipment, which is designed and intended to be mounted on a ceiling (2) or wall and has a lifting device with at least one flexible pulling means (3), wherein the lifting device has a winding shaft (4), onto which the pulling means (3) can be wound, wherein the lifting device has a drive motor for driving the winding shaft, designed as a tubular motor and at least partly arranged in the winding shaft (4), **characterized in that** the winding shaft (4) has a shape deviating from the circular shape in a plane perpendicular to the direction of its longitudinal extent, and the drive motor (5) has an output element (11) which is arranged in a form-fitting manner in the winding shaft (4).

2. Storage device (1) according to Claim 1, **characterized in that** the drive motor (5) is followed in drive terms by a gearbox, which is arranged in particular in the winding shaft (4), and/or there is a remote control, in particular a radio remote control (17) or a smartphone, by means of which the drive motor (5) can be controlled.

3. Storage device (1) according to Claim 1 or 2, **characterized by** a mounting, which is designed and intended to be fixed to a wall or to a ceiling (2) and which functions as a torque support for the drive motor (5) .

4. Storage device (1) according to one of Claims 1 to 3, **characterized by** a housing (6), which surrounds at least the winding shaft (4), or by a housing (6) which surrounds at least the winding shaft (4) and which has an outlet opening for the pulling means (3).

5. Storage device (1) according to Claim 3 and Claim 4, **characterized in that** the mounting carries the housing (6) or **in that** the mounting is formed by the housing (6).

6. Storage device (1) according to one of Claims 1 to 5, **characterized in that**
a. there is a plurality, in particular exactly two, pulling means (3), and/or **in that**
b. there are two pulling means (3), the horizontal spacing of which lies in the range from 50 cm to 90 cm, in particular in the range from 55 cm to 65 cm, or is 60 cm, and/or **in that**
c. there are two pulling means (3), the horizontal spacing of which is adjustable, in particular continuously, and/or **in that**
d. there are two pulling means (3), wherein the length of at least one of the pulling means (3) is adjustable, and/or **in that**
e. there are two pulling means (3) of different lengths, and/or **in that**
f. there are two pulling means (3) parallel to each other.

7. Storage device according to one of Claims 1 to 6, **characterized in that**
a. a plurality of pulling means (3), in particular exactly two pulling means (3), are coupled to the winding shaft, can be wound simultaneously onto the winding shaft (4) and can be unwound simultaneously from the winding shaft (4), or **in that**
b. a plurality of pulling means (3), in particular exactly two pulling means (3), are coupled to the winding shaft (4), can be wound simultaneously onto the winding shaft (4) and can be unwound simultaneously from the winding shaft (4), wherein the length of the winding shaft (4) is greater than the parallel spacing of the pulling means (3), or in that
c. there is a plurality of pulling means (3), in particular exactly two pulling means (3), and a plurality of winding shafts (4), which are driven jointly by the same drive motor (5), or **in that**
d. there is a plurality of pulling means (3), in particular exactly two pulling means (3), and a plurality of winding shafts (4), which are driven jointly by the same drive motor (5), wherein the parallel spacing of the pulling means corresponds to the spacing of the winding shafts (4).

8. Storage device (1) according to one of Claims 1 to 7, **characterized in that**
a. the pulling means (3) has a coupling element (15) at its free end for coupling to a load to be lifted, or **in that** each of the pulling means (3) has a coupling element (15) at its free end for coupling to a load to be lifted, or **in that**
b. the pulling means (3) has a coupling element (15) at its free end for coupling to a load to be lifted, or **in that** each of the pulling means (3) has a coupling element (15) at its free end for coupling to a load to be lifted, wherein the coupling element (15) is designed as an in particular adjustable loop and/or has a hook-and-loop fastener and/or has a hook and/or has a storage platform.

9. Storage device (1) according to one of Claims 1 to 8, **characterized by**
a. an electrical energy store (16), in particular a rechargeable battery, which can in particular be removed without tools and/or without destruction, or by
b. an electrical energy store (16), in particular a rechargeable battery, which can in particular be removed without tools and/or without destruction, which provides energy for operating the drive motor and/or to be output to the object to be stored.

10. Storage device (1) according to Claim 9, **characterized by** a receptacle into which the electrical energy store (16) can be inserted and removed again, in particular without tools and/or without destruction.

11. Storage device (1) according to one of Claims 1 to 10, **characterized by** an electric plug connector for outputting electrical energy, in particular for outputting electrical energy to the object to be stored.

12. Storage device (1) according to one of Claims 1 to 11, **characterized in that** the winding shaft (4) is designed to be polygonal in cross section, in particular hexagonal or octagonal.

13. Storage device system, which has at least two storage devices (1) according to one of Claims 1 to 12.

14. Storage device system according to Claim 13, **characterized in that**
a. the storage devices (1) are controlled synchronously and/or **in that** there is a control device which controls the storage devices (1) synchronously, and/or **in that**
b. there is an operating device, by means of which the two storage devices (1) can be controlled simultaneously and synchronously, and/or **in that**
c. there is an operating device, by means of which the two storage devices (1) can be controlled simultaneously and synchronously, wherein the operating device is a remote control, in particular a radio remote control (17) or a smartphone, and/or in that
d. the storage devices (1) have a common coupling element (15) for coupling to a load to be lifted, and/or **in that**
e. the storage devices (1) have a common coupling element (15) for coupling to a load to be lifted, which has a common storage platform (26) or a common storage net.

## Revendications

1. Dispositif de stockage (1), en particulier d'articles de sport, ledit dispositif étant réalisé et conçu pour être monté à un plafond (2) ou à une paroi et comportant un dispositif de levage avec au moins un moyen de traction flexible (3), dans lequel le dispositif de levage comporte un arbre d'enroulement (4) sur lequel le moyen de traction (3) peut être enroulé, dans lequel le dispositif de levage comporte un moteur d'entraînement réalisé sous la forme d'un moteur tubulaire et disposé au moins en partie dans l'arbre d'enroulement (4) pour entraîner l'arbre d'enroulement ;
**caractérisé en ce que** l'arbre d'enroulement (4) comporte dans un plan perpendiculaire à sa direction d'extension longitudinale une forme s'écartant de la forme d'un cercle et le moteur d'entraînement (5) comporte un élément d'entraînement en sortie (11) qui est disposé par complémentarité de formes dans l'arbre d'enroulement (4) .

2. Dispositif de stockage (1) selon la revendication 1, **caractérisé en ce qu'**une transmission, disposée en particulier dans l'arbre d'enroulement (4), est connectée en aval, sur le plan de la technique des impulsions, du moteur d'entraînement (5) et/ou qu'une télécommande, en particulier une télécommande radio (17) ou un smartphone, est présente à l'aide de laquelle le moteur d'entraînement (5) peut être commandé.

3. Dispositif de stockage (1) selon la revendication 1 ou 2, **caractérisé par** la présence d'une fixation, ledit dispositif étant réalisé et conçu pour être fixé à une paroi ou à un plafond (2) et servant d'appui au couple de rotation pour le moteur d'entraînement (5).

4. Dispositif de stockage (1) selon l'une quelconque des revendications 1 à 3, **caractérisé par** la présence d'un carter (6) entourant au moins l'arbre d'enroulement (4) ou par la présence d'un carter (6) entourant au moins l'arbre d'enroulement (4) et comportant une ouverture de sortie pour le moyen de traction (3).

5. Dispositif de stockage (1) selon la revendication 3 et la revendication 4, **caractérisé en ce que** la fixation supporte le carter (6) ou que la fixation est formée par le carter (6) .

6. Dispositif de stockage (1) selon l'une quelconque des revendications 1 à 5, **caractérisé en ce que** :
a. plusieurs moyens de traction (3), en particulier précisément deux, sont présents ; et/ou
b. deux moyens de traction (3) sont présents dont l'écartement horizontal se situe dans la région de 50 cm à 90 cm, en particulier se situe dans la région de 55 cm à 65 cm ou est de 60 cm ; et/ou
c. deux moyens de traction (3) sont présents dont l'écartement horizontal peut être réglé, en particulier en continu ; et/ou
d. deux moyens de traction (3) sont présents, la longueur d'au moins un des moyens de traction (3) pouvant être réglée ; et/ou
e. deux moyens de traction (3) de longueurs différentes sont présents ; et/ou
f. deux moyens de traction (3) parallèles entre eux sont présents.

7. Dispositif de stockage selon l'une quelconque des revendications 1 à 6, **caractérisé en ce que** :
a. plusieurs moyens de traction (3), en particulier précisément deux moyens de traction (3), sont couplés à l'arbre d'enroulement, lesdits moyens de traction pouvant être enroulés simultanément sur l'arbre d'enroulement (4) et pouvant être déroulés simultanément de l'arbre d'enroulement (4) ; ou
b. plusieurs moyens de traction (3), en particulier précisément deux moyens de traction (3), sont couplés à l'arbre d'enroulement (4), lesdits moyens de traction pouvant être enroulés simultanément sur l'arbre d'enroulement (4) et pouvant être déroulés simultanément de l'arbre d'enroulement (4), la longueur de l'arbre d'enroulement (4) étant supérieure à la distance parallèle des moyens de traction (3) ; ou
c. plusieurs moyens de traction (3), en particulier précisément deux moyens de traction (3), et plusieurs arbres d'enroulement (4) sont présents et sont entraînés ensemble par le même moteur d'entraînement (5) ; ou
d. plusieurs moyens de traction (3), en particulier précisément deux moyens de traction (3), et plusieurs arbres d'enroulement (4) sont présents et sont entraînés ensemble par le même moteur d'entraînement (5), la distance parallèle des moyens de traction correspondant à la distance des arbres d'enroulement (4).

8. Dispositif de stockage (1) selon l'une quelconque des revendications 1 à 7, **caractérisé en ce que** :
a. le moyen de traction (3) comporte au niveau de son extrémité libre un élément de couplage (15) pour le couplage d'une charge à lever ou que chacun des moyens de traction (3) comporte au niveau de son extrémité libre un élément de couplage (15) pour le couplage d'une charge à lever ; ou
b. le moyen de traction (3) comporte au niveau de son extrémité libre un élément de couplage (15) pour le couplage d'une charge à lever ou que chacun des moyens de traction (3) comporte au niveau de son extrémité libre un élément de couplage (15) pour le couplage d'une charge à lever, l'élément de couplage (15) étant réalisé sous la forme d'une boucle en particulier réglable et/ou d'une fermeture velcro et/ou d'un crochet et/ou d'une plateforme de rangement.

9. Dispositif de stockage (1) selon l'une quelconque des revendications 1 à 8, **caractérisé par** :
a. un accumulateur d'énergie électrique (16) pouvant en particulier être retiré sans outil et/ou sans destruction, en particulier une batterie ; ou
b. un accumulateur d'énergie électrique (16) pouvant en particulier être retiré sans outil et/ou sans destruction, en particulier une batterie, qui met à disposition de l'énergie servant à actionner le moteur d'entraînement et/ou à évacuer l'objet à stocker.

10. Dispositif de stockage (1) selon la revendication 9, **caractérisé par** un logement dans lequel l'accumulateur d'énergie électrique (16) peut être inséré ou de nouveau être retiré en particulier sans outil et/ou sans destruction.

11. Dispositif de stockage (1) selon l'une quelconque des revendications 1 à 10, **caractérisé par** un connecteur enfichable électrique permettant de transmettre de l'énergie électrique, en particulier de transmettre de l'énergie à l'objet à stocker.

12. Dispositif de stockage (1) selon l'une quelconque des revendications 1 à 11, **caractérisé en ce que** l'arbre d'enroulement (4) est réalisé en section transversale avec plusieurs pans, en particulier six pans ou huit pans.

13. Système de dispositif de stockage qui comporte au moins deux dispositifs de stockage (1) selon l'une quelconque des revendications 1 à 12.

14. Système de dispositif de stockage selon la revendication 13, **caractérisé en ce que** :
a. les dispositifs de stockage (1) sont commandés de façon synchrone et/ou qu'un dispositif de commande est présent qui commande les dispositifs de stockage (1) de façon synchrone ; et/ou
b. un dispositif de commande est présent à l'aide duquel les deux dispositifs de stockage (1) peuvent être commandés simultanément et de façon synchrone ; et/ou
c. un dispositif de commande est présent à l'aide duquel les deux dispositifs de stockage (1) peuvent être commandés simultanément et de façon synchrone, le dispositif de commande étant une télécommande, en particulier une télécommande radio (17) ou un smartphone ;
et/ou
d. les dispositifs de stockage (1) comportant un élément de couplage (15) commun pour le couplage d'une charge à lever et/ou
e. les dispositifs de stockage (1) comportant un élément de couplage (15) commun pour le couplage d'une charge à lever qui comporte une plateforme de rangement (26) commune ou un filet de rangement commun.
